# EUROPÄISCHE PATENTANMELDUNG

(11) **EP 4 711 229 A1**
(43) Veröffentlichungstag der Anmeldung: **18.03.2026**
(21) Anmeldenummer: 24200864.7
(22) Anmeldetag: 17.09.2024
(51) Int. Cl.: B61D 23/02, B60R 3/02

(54) **EINSTIEGSHILFE FÜR EIN SCHIENENFAHRZEUG, SCHIENENFAHRZEUG MIT EINER EINSTIEGSHILFE SOWIE VERFAHREN ZUM EIN- UND/ODER AUSSCHWENKEN EINES TRITTBRETTS EINER EINSTIEGSHILFE**

(71) Anmelder: Stadler Rail AG, 9565 Bussnang (CH)
(72) Erfinder: Bösch, Wolfgang, 9430 St. Margrethen (CH); Alther, Stefan, 9430 St. Margrethen (CH); Bosshart, Alex, 9425 Thal (CH)
(74) Vertreter: Hepp Wenger Ryffel AG

(57) **Zusammenfassung**

Die Erfindung betrifft eine Einstiegshilfe 1 für ein Schienenfahrzeug 2. Die Einstiegshilfe 1 umfasst ein Befestigungselement 7, wobei das Befestigungselement 7 am Schienenfahrzeug 2 befestigbar ist. Ferner umfasst die Einstiegshilfe 1 einen Schwenkarm 8. Der Schwenkarm 8 ist um eine erste Schwenkachse 9 schwenkbar an dem Befestigungselement 7 befestigt. Ferner umfasst die Einstiegshilfe 1 ein Trittbrett 10. Das Trittbrett 10 ist um eine zweite Schwenkachse 11 schwenkbar an dem Schwenkbar 8 befestigt. Die erste Schwenkachse 9 und die zweite Schwenkachse 11 sind im Wesentlichen orthogonal zueinander zugeordnet. Die erste Schwenkachse 9 ist in einer Anwendungsposition der Einstiegshilfe 1 im Wesentlichen horizontal ausgebildet.

Ferner betrifft die Erfindung ein Schienenfahrzeug 2 mit einer Einstiegshilfe 1 sowie ein Verfahren zum ein- und/oder ausschwenken eines Trittbretts 10 einer Einstiegshilfe 1.

## Beschreibung

Die vorliegende Erfindung betrifft eine Einstiegshilfe für ein Schienenfahrzeug, ein Schienenfahrzeug mit einer Einstiegshilfe sowie ein Verfahren zum Ein- und/oder Ausschwenken einer Einstiegshilfe.

Einstiegshilfen für Schienenfahrzeuge sind aus dem Stand der Technik bekannt. Einstiegshilfen ermöglichen es dem Personal von Schienenfahrzeugen, beispielsweise dem Lokführer, von einem unterhalb der Türkante gelegenen Einstiegsniveau (z.B. vom Gleisbett aus) in sicherer, arbeitsschutzkonformer Weise in das Schienenfahrzeug einzusteigen. Gemäss der Vorschrift TSI LOC&PAS 2014-1302 Abschnitt 4.2.9.1.2.1 soll der Führerraum des Schienenfahrzeugs von beiden Seiten des Schienenfahrzeugs von einem Niveau von 200 mm unter der Schienenoberkante zugänglich sein. Gemäss der Norm EN 16116-1 soll die Höhe des Einstiegs 600 mm über der Schienenoberkante sein. Lokale Vorschriften, wie z.B. die §47 Abs. 3 Ziff. 2 AM-VO können auch explizite Höhen (z.B. 600 mm) fordern.

Zur Erfüllung dieser Vorgaben sind verschiedene Lösungen bekannt. Das Dokument DE 102 402 84 A1 offenbart einen dreh- und klappbaren Tritt. Diese Lösung ist jedoch mechanisch aufwendig, festigkeitsmässig ungünstig und ergonomisch nachteilig. Es besteht daher Bedarf an einer verbesserten Einstiegshilfe.

Es ist die Aufgabe der Erfindung, die Nachteile des Standes der Technik zu überwinden und insbesondere eine Einstiegshilfe für ein Schienenfahrzeug zu schaffen, welche mechanisch robust aufgebaut, einfach zu bedienen sowie ergonomisch vorteilhaft benutzbar ist.

Die Aufgabe wird durch eine Einstiegshilfe für ein Schienenfahrzeug, ein Schienenfahrzeug mit einer Einstiegshilfe sowie ein Verfahren zum ein- und/oder ausschwenken eines Trittbretts einer Einstiegshilfe gemäss den unabhängigen Patentansprüchen gelöst.

Insbesondere wird die Aufgabe durch eine Einstiegshilfe für ein Schienenfahrzeug gelöst. Die Einstiegshilfe umfasst ein Befestigungselement, wobei das Befestigungselement an einem Schienenfahrzeug befestigbar ist. Die Einstiegshilfe umfasst einen Schwenkarm, wobei der Schwenkarm um eine erste Schwenkachse schwenkbar an dem Befestigungselement befestigt ist. Die Einstiegshilfe umfasst ein Trittbrett, wobei das Trittbrett um eine zweite Schwenkachse schwenkbar an dem Schwenkarm befestigt ist, wobei die erste Schwenkachse und die zweite Schwenkachse im Wesentlichen orthogonal zueinander angeordnet sind. Die erste Schwenkachse ist in einer Anwendungsposition der Einstiegshilfe im Wesentlichen horizontal ausgebildet.

Das Befestigungselement kann eine Konsole oder ein Träger sein.

Eine solche Einstiegshilfe ist robust aufgebaut und ermöglicht es dem Schienenfahrzeugpersonal auf eine ergonomisch angenehme und arbeitsschutzkonforme Weise in das Schienenfahrzeug zu gelangen.

Eine Anwendungsposition ist die Position, in der sich die Einstiegshilfe bei der vorgesehenen Anwendung befindet. Die Einstiegshilfe kann aus Stahl ausgebildet sein. Es ist auch möglich, dass die Einstiegshilfe im Wesentlichen aus Aluminium ausgebildet ist. Das Befestigungselement kann beispielsweise ein Bolzen sein. Das Befestigungselement kann eine Konsole oder ein Träger sein. Die Konsole oder der Träger kann an das Schienenfahrzeug geschraubt oder genietet sein. Es ist auch möglich, dass das Befestigungselement eine Montageplatte ist, mit der die Einstiegshilfe an ein Schienenfahrzeug angeschraubt werden kann. Die Montageplatte kann mit vier Schrauben an dem Schienenfahrzeug befestigt sein. Dann ist das Befestigungselement eine Montageplatte und der Schwenkarm ist um die erste Achse schwenkbar an dem Befestigungselement angebracht, beispielsweise mit einem Bolzen. Der Bolzen kann gelagert sein. Die Lager können beispielsweise Kugellager, Kegellager oder Nadellager sein. Das Lager kann an oder in dem Befestigungselement ausgebildet sein. Wenn das Befestigungselement eine Konsole ist, kann das Lager an oder in der Konsole ausgebildet sein. Das Trittbrett kann aus demselben Material wie der Schwenkarm ausgebildet sein. Es ist auch möglich, dass das Trittbrett aus einem anderen Material als der Schwenkarm ausgebildet ist. Es ist möglich, dass das Trittbrett eine Beschichtung aufweist. Beispielsweise kann das Trittbrett eine rutschhemmende Beschichtung aufweisen oder zumindest teilweise ein Gitter sein. Es ist auch möglich, dass das Trittbrett aufgeraut ist oder eine Riffelung umfasst. Dann kann das Trittbrett sicher und angenehm von einem Benutzer betreten werden und es wird verhindert, dass der Benutzer bei der Benutzung des Trittbretts ausrutscht. Das Trittbrett kann an dem Schwenkarm beispielsweise mit einem Bolzen beweglich (schwenkbar) befestigt sein. Es ist möglich, dass der Bolzen an dem Schwenkarm und/oder am Trittbrett gelagert ist, beispielsweise durch Gleitlager, Kugellager, Kegellager oder Nadellager. Die Lager, mit denen das Trittbrett an dem Schwenkarm und mit denen der Schwenkarm an dem Befestigungselement befestigt ist, können identisch ausgebildet sein.

Es ist möglich, dass der Schwenkarm zwei Schenkel umfasst, wobei die zwei Schenkel einen Winkel von im Wesentlichen 90° einschliessen.

Eine solche Anordnung ermöglicht eine kompakte Ausbildung der Einstiegshilfe und ein vorteilhaftes Verschwenken der Einstiegshilfe.

Es ist möglich, dass das Befestigungselement an einem Ende eines Schenkels, welches von dem Winkel, welcher durch die Schenkel eingeschlossen wird, gegenüberliegend angeordnet ist, schwenkbar angeschlagen ist. Es ist möglich, dass das Trittbrett an einem Ende des anderen Schenkels, welches von dem Winkel, welcher durch die Schenkel eingeschlossen wird, gegenüberliegend angeordnet ist, schwenkbar angeschlagen ist. Dann ist an dem einen Ende des Schwenkarms das Befestigungselement schwenkbar angeschlagen und an dem anderen Ende des Schwenkarms ist das Trittbrett schwenkbar angeschlagen.

Bei dem Schwenkarm und bei dem Trittbrett kann es sich beispielsweise um Hohlprofile handeln. Es ist auch möglich, dass es sich bei dem Schwenkarm und/oder dem Trittbrett um U-Profile handelt. Es ist möglich, dass der Schwenkarm und/oder das Trittbrett durch Fräsen und/oder Biegen hergestellt sind.

Es ist möglich, dass der Schwenkarm eine Ruheposition und eine Benutzungsposition aufweist, wobei der Schwenkarm zwischen der Ruheposition und der Benutzungsposition um einen Winkel zwischen 90° und 200° verschwenkbar ist. Es ist auch möglich, dass der Schwenkarm zwischen der Ruheposition und der Benutzungsposition um einen Winkel zwischen 120° und 170° verschwenkbar ist. Es ist auch möglich, dass der Schwenkarm zwischen der Ruheposition und der Benutzungsposition um einen Winkel zwischen 140° und 160° verschwenkbar ist.

Eine derartige Ausbildung der Einstiegshilfe ermöglicht eine kompakte Anordnung der Einstiegshilfe in der Ruheposition und eine ergonomisch vorteilhafte Anordnung der Einstiegshilfe in der Benutzungsposition.

Es ist möglich, dass die Einstiegshilfe einen Elektromotor umfasst, durch welchen der Schwenkarm von der Ruheposition in die Benutzungsposition und/oder von der Benutzungsposition in die Ruheposition schwenkbar ist.

Durch die Anordnung eines Elektromotors kann der Schwenkarm einfach und unkompliziert von der Benutzungsposition in die Ruheposition oder von der Ruheposition in die Benutzungsposition geschwenkt werden.

Die Bedienung des Elektromotors kann über den Schlüsselschalter für den Einstieg, also über die Fahrzeug- bzw. Türsteuerung, erfolgen. Das Schienenfahrzeugpersonal, beispielsweise der Lokführer, kann mit seinem Schlüssel die Türöffnung betätigen und somit die Einstiegshilfe ausfahren. Um die Einstiegshilfe wieder einzufahren, wird von dem Schienenfahrzeugpersonal nach dem Einsteigevorgang, wenn sich das Schienenfahrzeugpersonal in dem Innenraum des Schienenfahrzeugs befindet, die Türsteuerung erneut betätigt, um die Einstiegshilfe einzufahren. Es ist möglich, dass der Elektromotor einen Überlastschutz aufweist. Bei einer Überlastung, beispielsweise wenn im Elektromotor ein Überstrom anliegt, wird dann der Öffnungs- bzw. Schliessprozess von dem Überlastschutz unterbrochen.

Der Elektromotor kann im Bereich des Befestigungselements ausgebildet sein. Es ist möglich, dass der Schwenkarm durch eine Nabe mit dem Befestigungselement verbunden ist und sich der Elektromotor in der Nabe befindet. Dann handelt es sich bei dem Elektromotor um einen Nabenmotor. Es ist auch möglich, dass der Elektromotor durch ein Seil oder eine Kette oder einen Riemen mit dem Schwenkarm oder dem Befestigungselement verbunden ist. Der Riemen kann ein Zahnriemen oder einen Keilriemen sein. Dann kann der Schwenkarm von dem Elektromotor zuverlässig und präzise gesteuert werden.

Das Trittbrett kann eine Ausgangsposition und eine Trittposition aufweisen. Das Trittbrett kann von der Ausgangsposition in die Trittposition und von der Trittposition in die Ausgangsposition um die zweite Schwenkachse schwenkbar sein. In der Trittposition kann das Trittbrett anschlagbar sein, sodass durch das Trittbrett in der Trittposition das Gewicht eines Benutzers aufnehmbar ist.

Durch eine derartige Ausbildung des Trittbretts kann das Trittbrett kompakt ausgebildet werden, ergonomisch sinnvoll von einem Benutzer betreten werden und zuverlässig aus- und eingeklappt werden.

Das Trittbrett kann mit dem Schwenkarm durch eine Spannvorrichtung verbunden sein. Die Spannvorrichtung kann sich in der Ausgangsposition oder in der Trittposition in einem gespannten Zustand befinden. Die Spannvorrichtung kann sich in der jeweils anderen Position in einem im Wesentlichen entspannten Zustand befinden. Die Spannvorrichtung kann eine Gasdruckfeder sein.

Durch die Anordnung einer Spannvorrichtung ist das Trittbrett einfach, präzise und zuverlässig ein- und ausfahrbar.

Wenn sich die Spannvorrichtung in der Ausgangsposition in einem gespannten Zustand befindet, dann befindet sich die Spannvorrichtung in der Trittposition in einem im Wesentlichen entspannten Zustand. Wenn sich die Spannvorrichtung in der Trittposition in einem gespannten Zustand befindet, dann befindet sich die Spannvorrichtung in einer Ausgangsposition in einem im Wesentlichen entspannten Zustand. Die Spannvorrichtung wechselt somit ihren Zustand, je nachdem, ob sich das Trittbrett in der Ausgansposition oder in der Trittposition befindet. Die Spannvorrichtung kann eine Feder sein. Es ist möglich, dass die Spannvorrichtung eine Gasdruckfeder ist. Der Anschlag des Trittbretts in der Trittposition kann durch einen Anschlag erfolgen. Es ist möglich, dass der Anschlag des Trittbretts in der Trittposition am Schwenkarm ausgebildet ist. Auch der Schwenkarm kann in der Benutzungsposition angeschlagen sein. Es ist möglich, dass der Schwenkarm in der Benutzungsposition an einem Anschlag angeschlagen ist, welcher sich an dem Befestigungselement befindet.

Es ist möglich, dass das Trittbrett mit dem Schwenkarm durch eine Zugvorrichtung verbunden ist. Das Trittbrett kann durch Zugvorrichtung von der Ausgangsposition in die Trittposition oder von der Trittposition in die Ausgangsposition schwenkbar sein. Die Zugvorrichtung kann der Spannvorrichtung entgegenwirken. Dadurch ist die Spannvorrichtung durch die Zugvorrichtung spannbar.

Durch eine derartige Zugvorrichtung ist das Trittbrett vorteilhaft ein- und ausschwenkbar.

Es ist möglich, dass durch die Zugvorrichtung das Trittbrett von der Ausgangsposition in die Trittposition ziehbar ist. Dann wird die Spannvorrichtung bei der Bewegung des Trittbretts von der Ausgangsposition in die Trittposition gespannt. Es ist auch möglich, dass durch die Zugvorrichtung das Trittbrett von der Trittposition in die Ausgangsposition ziehbar ist. Dann wird die Spannvorrichtung bei der Bewegung von der Trittposition in die Ausgangsposition durch die Zugvorrichtung gespannt.

Wenn das Trittbrett in der Ausgangsposition oder in der Trittposition von der Zugvorrichtung gespannt ist, hält die Zugvorrichtung das Trittbrett in der jeweiligen Position bei gespannter Spannvorrichtung. Sobald die Zugvorrichtung freigegeben wird, bewegt sich dann das Trittbrett von der Position, in der es sich befindet in die jeweils andere Position.

Die Spannvorrichtung und die Zugvorrichtung ergänzen sich somit gegenseitig und sorgen dafür, dass das Trittbrett automatisch ein- und ausschwenkbar ist.

Die Zugvorrichtung kann beispielsweise ein Seil sein. Das Seil kann beispielsweise durch einen Elektromotor eingezogen und wieder freigegeben werden. Es ist möglich, dass der Elektromotor arretierbar ausgebildet ist. Dann kann der Elektromotor durch die Arretierung entlastet werden, wenn die Zugvorrichtung eingezogen ist und die Spannvorrichtung dabei gespannt ist. Bei der Zugvorrichtung kann es sich auch um eine Kette oder einen Riemen handeln.

Der Schwenkarm kann eine Ausnehmung aufweisen, in die das Trittbrett in der Ausgangsposition versenkt ist.

Eine solche Ausnehmung ermöglicht das kompakte Anordnen des Trittbretts in den Schwenkarm in der Ausgangsposition. Somit ist die Einstiegshilfe in der Ausgangsposition kompakt und platzsparend anordenbar.

Das Trittbrett kann an einem Schenkel befestigt sein und in der Ausgangsposition die gleiche Ausrichtung aufweisen wie der Schenkel. Es ist auch möglich, dass das Trittbrett in der Trittposition im Wesentlichen orthogonal zu dem Schenkel ausgebildet ist.

Durch eine derartige Anordnung ist das Trittbrett in der Ausgangsposition kompakt verstaubar und in der Trittposition ist das Trittbrett von einem Benutzer vorteilhaft benutzbar.

Die Erfindung wird weiterhin gelöst durch ein Schienenfahrzeug mit einer Einstiegshilfe wie vorhergehend beschrieben. Die Einstiegshilfe kann in einem Führerstandwagen des Schienenfahrzeugs ausgebildet sein.

Ein solches Schienenfahrzeug ist durch die Einstiegshilfe vorteilhaft von dem Schienenfahrzeugpersonal betretbar und hat im Wesentlichen die Vorteile wie vorhergehend beschrieben.

Der Führerstandwagen des Schienenfahrzeugs ist der Wagen, in dem der Führerstand angeordnet ist. Somit kann ein Lokführer von dem Gleisbett über die Einstiegshilfe in das Schienenfahrzeug und dann in dem Schienenfahrzeug in den Führerstand gelangen. Es ist möglich, dass das Schienenfahrzeug pro Führerstandwagen eine Einstiegshilfe umfasst. Es ist auch möglich, dass das Schienenfahrzeug pro Führerstandwagen zwei Einstiegshilfen umfasst. Die zwei Einstiegshilfen pro Führerstandwagen können in Fahrtrichtung auf jeder Seite des Führerstandwagens angeordnet sein. Dann kann das Schienenpersonal von jeder Seite des Schienenfahrzeugs von dem Gleisbett den Führerstandwagen betreten. Es ist möglich, dass sämtliche Türen des Schienenfahrzeugs mit einer Einstiegshilfe ausgestattet sind.

Es ist möglich, dass eine Oberkante des Trittbretts in der Trittposition zwischen 10 cm bis 40 cm unter einer Einstiegskante des Schienenfahrzeugs angeordnet ist. Es ist möglich, dass die Oberkante des Trittbretts in der Trittposition 30 cm unter einer Einstiegskante und 30 cm über einer Schienenoberkante (SOK) angeordnet ist.

Durch eine derartige Anordnung des Trittbretts kann ein Lokführer komfortabel und ergonomisch angenehm in das Schienenfahrzeug gelangen.

Es ist möglich, dass das Schienenfahrzeug mindestens zwei Einstiegshilfen aufweist. Es ist möglich, dass auf beiden Seiten gegenüberliegend quer zur Fahrtrichtung des Schienenfahrzeugs je eine Einstiegshilfe ausgebildet ist. Es ist möglich, dass pro Endwagen eine Einstiegshilfe ausgebildet ist. Es ist auch möglich, dass auf beiden Seiten gegenüberliegend quer zur Fahrtrichtung des Endwagens je eine Einstiegshilfe ausgebildet ist.

Durch eine derartige Anordnung der Einstiegshilfen an dem Schienenfahrzeug kann das Schienenfahrzeug von jeder Seite komfortabel und ergonomisch sinnvoll betreten werden.

Es ist möglich, dass die erste Schwenkachse in Richtung einer Schienenfahrzeuglängsrichtung ausgebildet ist.

Durch eine derartige Anordnung kann die Einstiegshilfe kompakt angeordnet werden und gleichzeitig vorteilhaft ausgeklappt und benutzt werden.

Die Schienenfahrzeuglängsrichtung ist die Richtung des Schienenfahrzeuges, in der sich die grösste Ausdehnung des Schienenfahrzeugs erstreckt. Die Längsrichtung des Schienenfahrzeugs entspricht der Bewegungsrichtung des Schienenfahrzeugs im gewöhnlichen Betrieb.

Es ist möglich, dass die Einstiegshilfe an einem Türrahmen des Schienenfahrzeugs angeordnet ist. Dann kann die Einstiegshilfe vorteilhaft im Bereich des Türrahmens verwendet werden und es ist nicht notwendig, dass für das Schienenfahrzeugpersonal eine eigene Tür vorgesehen werden muss.

Es ist möglich, dass das Schienenfahrzeug eine Türöffnung aufweist und sich der Schwenkarm in der Benutzungsposition durch die Türöffnung erstreckt. Es ist möglich, dass die Einstiegshilfe in der Ruheposition im Schienenfahrzeuginnenraum innerhalb der Tür ausgebildet ist.

Durch eine derartige Anordnung kann das Schienenfahrzeug ordnungsgemäss verkehren, wenn die Einstiegshilfe in der Ruheposition innerhalb der Türe ausgebildet ist. Wenn der Schwenkarm sich in der Benutzungsposition durch die Türöffnung erstreckt, kann sich die Türe des Schienenfahrzeugs nicht schliessen. Somit ist ausgeschlossen, dass sich das Schienenfahrzeug mit dem Schwenkarm in Benutzungsposition in Bewegung setzt oder sich die Türen schliessen und einen Benutzer der Einstiegshilfe verletzen.

Die Aufgabe der Erfindung wird ausserdem durch ein Verfahren zum Ein- und/oder Ausschwenken eines Trittbretts einer Einstiegshilfe gelöst. Bei der Einstiegshilfe kann es sich um eine Einstiegshilfe wie vorhergehend beschrieben handeln.

Das Verfahren umfasst die folgenden Schritte:
- Bewegen des Trittbretts von einer Ausgangsposition in eine Trittposition oder von der Trittposition in die Ausgangsposition durch eine Zugvorrichtung bei simultanem Spannen einer Spannvorrichtung, bevorzugt bis zum Anschlagen des Trittbretts an einem Anschlag,
- Optional, Bewegen des Trittbretts von der Ausgangsposition in die Trittposition oder von der Trittposition in die Ausgangsposition durch Entspannen der Spannvorrichtung bei simultanem Einziehen der Zugvorrichtung, bevorzugt bis zum Anschlagen des Trittbretts an dem Anschlag.

Ein solches Verfahren ist sicher und einfach ausführbar und weist im Wesentlichen die Vorteile einer Vorrichtung auf wie vorhergehend beschrieben.

Das Ein- oder Ausklappen des Trittbretts kann manuell erfolgen. Dies kann geschehen, indem beispielsweise ein Lokführer mit seiner Hand den Schwenkarm und/oder das Trittbrett greift und in die gewünschte Position bringt.

Die Erfindung wird in den folgenden Figuren näher erläutert. Es zeigen:
- Figur 1:: Eine Einstiegshilfe mit einem Schwenkarm,
- Figur 2:: eine Einstiegshilfe mit einem Schwenkarm in der Benutzungsposition,
- Figur 3:: ein Schienenfahrzeug mit einer Einstiegshilfe,
- Figur 4:: eine Einstiegshilfe mit einer Zugvorrichtung,
- Figur 5:: eine Einstiegshilfe mit einer Zugvorrichtung in der Benutzungsposition,
- Figur 6:: eine Einstiegshilfe mit einer Spannvorrichtung.

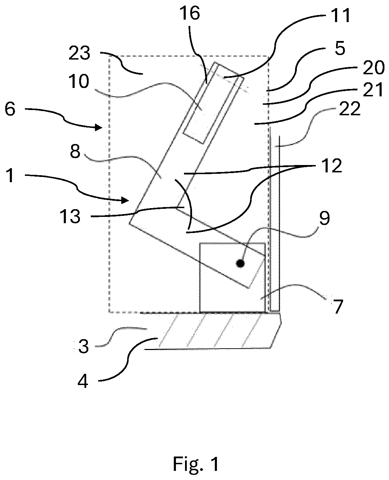

Die Figur 1 zeigt eine Einstiegshilfe 1 mit einem Schwenkarm 8. Die Einstiegshilfe 1 ist in dem Wagenkasten 3 eines Schienenfahrzeugs angeordnet. Der Wagenkasten 3 umfasst ein Schienenfahrzeugboden 4 und eine Schienenfahrzeugwand. Die Einstiegshilfe 1 ist in einem Gehäuse 6 angeordnet. Die Einstiegshilfe 1 ist um die erste Schwenkachse 9 schwenkbar mit dem Befestigungselement 7 verbunden. Die Einstiegshilfe 1 umfasst zwei Schenkel 12. Die zwei Schenkel 12 schliessen einen Winkel 13 von 90° ein. Die Einstiegshilfe 1 umfasst ein Trittbrett 10. Das Trittbrett 10 ist in der Ausnehmung 16 angeordnet. Das Trittbrett 10 ist um die zweite Schwenkachse 11 schwenkbar mit dem Schenkel 12 der Einstiegshilfe 1 verbunden. In der Figur 1 ist der Schwenkarm 8 der Einstiegshilfe 1 in der Ruheposition ausgebildet und das Trittbrett 10 der Einstiegshilfe 1 ist in der Ausgangsposition ausgebildet. In dieser Position befindet sich die Einstiegshilfe 1 in dem Schienenfahrzeuginnenraum 23 und erstreck sich nicht durch die Türöffnung 21. Die Einstiegshilfe 1 ist mit dem Befestigungselement 7 mit dem Schienenfahrzeugboden 4 verbunden. Die erste Schwenkachse 9 und die zweite Schwenkachse 11 sind orthogonal zueinander ausgebildet. Die erste Schwenkachse 9 erstreckt sich orthogonal zur Zeichenebene. Auch die Bewegungsrichtung des Schienenfahrzeugs erstreckt sich orthogonal zur Zeichenebene.

Die zweite Schwenkachse 11 liegt in der Zeichenebene. Der Schwenkarm 8 der Einstiegshilfe 1 ist um die erste Schwenkachse 9 durch die Türöffnung 21 schwenkbar ausgebildet. Dafür muss zunächst das Türblatt 22 von der Türöffnung 21 wegbewegt werden. Das Türblatt 22 bewegt sich orthogonal zur Zeichenebene.

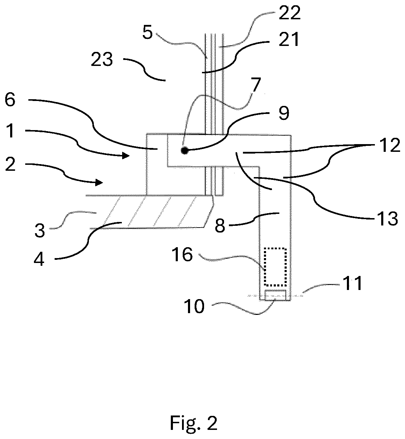

Die Figur 2 zeigt eine Einstiegshilfe 1 in einem Schienenfahrzeug 2 analog zu der Figur 1. Anders als in der Figur 1 befindet sich der Schwenkarm 8 der Einstiegshilfe 1 in der Benutzungsposition. Die Zeichenebene ist identisch ausgebildet wie in der Figur 1. Das Trittbrett 10 der Einstiegshilfe 1 befindet sich hier in der Trittposition. In der Trittposition ist das Trittbrett 10 von der Ausnehmung 16 um die zweite Schwenkachse 11 in die Trittposition umgeschwenkt. In der Trittposition ist das Trittbrett 10 im Wesentlichen horizontal ausgebildet. In der Trittposition ist das Trittbrett 10 im Wesentlichen orthogonal zur einem Schenkel 12 des Schwenkarms 8 ausgebildet. Die erste Schwenkachse 9 verläuft in die Bewegungsrichtung des Schienenfahrzeugs 2. Sowohl die Bewegungsrichtung des Schienenfahrzeugs 2 als auch die erste Schwenkachse 9 sind orthogonal zur Zeichenebene ausgebildet. Die zweite Schwenkachse 11 verläuft in der Zeichenebene und somit quer zur Bewegungsrichtung (nicht dargestellt) des Schienenfahrzeugs 2. Ein Schenkel 12 des Schwenkarms 8 erstreckt sich in der Benutzungsposition des Schwenkarms 8 durch die Türöffnung 21.

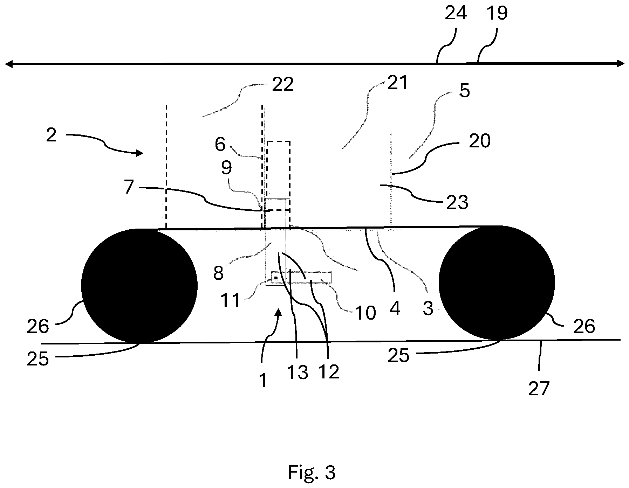

Die Figur 3 zeigt eine Einstiegshilfe 1 in einem Schienenfahrzeug 2 analog zu den Figuren 1 und 2. Anders als in den Figuren 1 und 2 ist in der Figur 3 eine Seitenansicht des Schienenfahrzeugs dargestellt. Die Zeichenebene in der Figur 3 ist orthogonal zur Zeichenebene in den Figuren 1 und 2 ausgebildet. Das Schienenfahrzeug 2 weist eine Bewegungsrichtung 24 auf. Die Bewegungsrichtung 24 entspricht der Schienenfahrzeuglängsrichtung 19. Das Schienenfahrzeug 2 weist zwei Räder 26 auf. Die Unterkanten der Räder 26 definieren die Schienenfahrzeugunterkante 25. Die Räder sind in der Figur 3 schematisch dargestellt. In dieser schematischen Darstellung ist die Unterkante der Räder 26 gleichzeitig die Schienenoberkante 27. Das Schienenfahrzeug 2 weist einen Wagenkasten 3 auf. Der Wagenkasten 3 weist ein Schienenfahrzeugboden 4 auf. In der Figur 3 ist der Schwenkarm 8 in der Benutzungsposition ausgebildet und das Trittbrett 10 ist in der Trittposition ausgebildet. Somit ist in der Figur 3 die Einstiegshilfe in der gleichen Position wie in der Figur 2. Das Trittbrett 10 und der Schwenkarm 8 sind in einem Winkel 13 von 90° zueinander angeordnet. Die zweite Schwenkachse 11 ist orthogonal zur Bewegungsrichtung 24 des Schienenfahrzeugs 2 sowie zu der Schienenfahrzeuglängsrichtung 19 ausgebildet. Die erste Schwenkachse 9 verläuft in Richtung der Schienenfahrzeuglängsrichtung 19 sowie der Bewegungsrichtung 24 und befindet sich in der Zeichenebene. Der Schwenkarm 8 erstreckt sich durch die Türöffnung 21. Das Trittbrett 10 ist im Wesentlichen horizontal ausgebildet. Das Trittbrett 10 ist auf einem Niveau zwischen dem Schienenfahrzeugboden 4 und der Schienenfahrzeugunterkante 25 angeordnet.

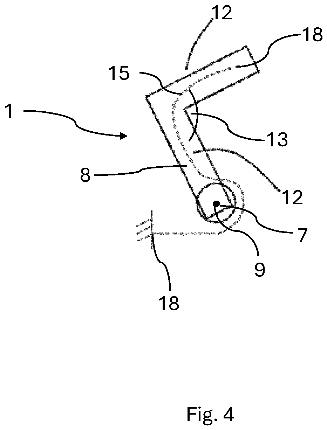

Die Figur 4 zeigt eine Einstiegshilfe 1 analog zu den Figuren 1 bis 3. Anders als in den Figuren 1 bis 3 weist die Einstiegshilfe in der Figur 4 eine Zugvorrichtung 15 auf. Die Zugvorrichtung 15 ist mit an den Anschlagpunkten 18 an einen Schenkel 12 des Schwenkarms 8 der Einstiegshilfe 1 angeschlagen und mit dem anderen Ende ist die Zugvorrichtung 15 an einen weiteren, fixen Anschlagpunkt 18 angeschlagen. Es ist möglich, dass die Zugvorrichtung 15 im Bereich des Winkels 13, an dem die beiden Schenkel 12 zusammentreffen, umgelenkt wird. Die Zugvorrichtung kann eine Federvorrichtung umfassen, die die Zugvorrichtung 15 gespannt hält. Die Zugvorrichtung 15 verläuft somit von einem Schenkel 12 des Schwenkarms 8 der Einstiegshilfe 1 um die erste Schwenkachse 9 zu einem Anschlagpunkt 18. In dieser Position befindet sich die Zugvorrichtung 15 in der eingezogenen Position und der Schwenkarm 8 befindet sich in der Ruheposition.

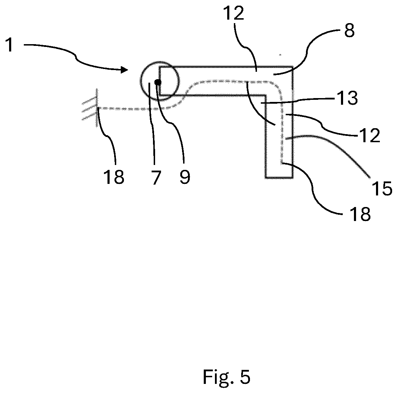

Die Figur 5 zeigt eine Einstiegshilfe 1 analog zu der Figur 4. Anders als in der Figur 4 ist die Zugvorrichtung 15 in der Figur 5 in der ausgezogenen Stellung abgebildet. In der Figur 5 befindet sich der Schwenkarm 18 in der Benutzungsposition.

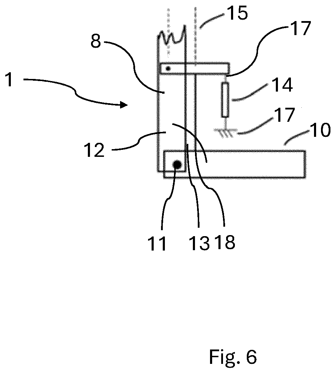

Die Figur 6 zeigt eine Einstiegshilfe 1 mit einer Spannvorrichtung 14. Die Spannvorrichtung 14 ist über ein Anschlagpunkt 17 mit dem Schwenkarm 8 verbunden und mit dem anderen Ende an einen weiteren Anschlagpunkt 17 angeschlagen. Ausserdem weist die Einstiegshilfe 1 eine Zugvorrichtung 15 auf. Die Zugvorrichtung 15 wirkt entgegen der Spannvorrichtung 14. Durch das Einziehen der Zugvorrichtung 15 kann somit die Spannvorrichtung 14 gespannt werden. Somit wird das Trittbrett 10 gleichmässig eingezogen. Dies geschieht, wenn die Zugvorrichtung 15 eingezogen wird. Durch ein Loslassen der Zugvorrichtung 15 entspannt sich die Spannvorrichtung 14 und bewegt das Trittbrett 10 in die Trittposition. Das Trittbrett 10 öffnet sich so gleichmässig. In der Trittposition des Trittbretts 10 befindet sich die Spannvorrichtung 14 somit in einem entspannten Zustand. In dem entspannten Zustand der Spannvorrichtung 14 ist die Zugvorrichtung ausgezogen. Bei dem Einziehen der Zugvorrichtung 15 bewegt sich das Trittbrett 10 von der Trittposition in die Ausgangsposition. Beim Bewegen des Trittbretts 10 von der Trittposition in die Ausgangsposition durch die Zugvorrichtung 15 wird die Spannvorrichtung 14 gespannt. Der Schwenkarm 8 umfasst einen Schenkel 12. Das Trittbrett 10 ist um die zweite Schwenkachse 11 beweglich an dem Schenkel 12 angeschlagen. Der zweite Schenkel 12 und das Trittbrett 10 schliessen in dieser Position einen Winkel 13 von 90° ein.

## Patentansprüche

1. Einstiegshilfe (1) für ein Schienenfahrzeug (2), umfassend
- Ein Befestigungselement (7), wobei das Befestigungselement (7) an einem Schienenfahrzeug (2) befestigbar ist,
- Einen Schwenkarm (8), wobei der Schwenkarm (8) um eine erste Schwenkachse (9) schwenkbar an dem Befestigungselement (7) befestigt ist,
- Ein Trittbrett (10), wobei das Trittbrett (10) um eine zweite Schwenkachse (11) schwenkbar an dem Schwenkarm (8) befestigt ist, wobei die erste Schwenkachse (9) und die zweite Schwenkachse (11) im Wesentlichen orthogonal zueinander angeordnet sind,
**dadurch gekennzeichnet, dass** die erste Schwenkachse (9) in einer Anwendungsposition der Einstiegshilfe (1) im Wesentlichen horizontal ausgebildet ist.

2. Einstiegshilfe (1) nach Anspruch 1, **dadurch gekennzeichnet, dass** der Schwenkarm (8) zwei Schenkel (12) umfasst, wobei die zwei Schenkel (12) einen Winkel (13) vom im Wesentlichen 90° einschliessen.

3. Einstiegshilfe (1) nach einem der vorhergehenden Ansprüche, **dadurch gekennzeichnet, dass** der Schwenkarm (8) eine Ruheposition und eine Benutzungsposition aufweist, wobei der Schwenkarm (8) zwischen der Ruheposition und der Benutzungsposition um einen Winkel zwischen 90° und 200°, bevorzugt zwischen 120° und 170°, insbesondere bevorzugt zwischen 140° und 160°, verschwenkbar ist.

4. Einstiegshilfe (1) nach Anspruch 3, **dadurch gekennzeichnet, dass** die Einstiegshilfe (1) einen Elektromotor umfasst, durch welchen der Schwenkarm (8) von der Ruheposition in die Benutzungsposition und/oder von der Benutzungsposition in die Ruheposition schwenkbar ist.

5. Einstiegshilfe (1) nach einem der vorhergehenden Ansprüche, **dadurch gekennzeichnet, dass** das Trittbrett (10) eine Ausgangsposition und eine Trittposition aufweist, wobei das Trittbrett (10) von der Ausgangsposition in die Trittposition und von der Trittposition in die Ausgangsposition um die zweite Schwenkachse (11) schwenkbar ist, wobei das Trittbrett (10) in der Trittposition anschlagbar ist, so dass durch das Trittbrett (10) in der Trittposition das Gewicht eines Benutzers aufnehmbar ist.

6. Einstiegshilfe (1) nach Anspruch 5, **dadurch gekennzeichnet, dass** das Trittbrett (10) mit dem Schwenkarm (8) durch eine Spannvorrichtung (14) verbunden ist, wobei sich die Spannvorrichtung (14) in der Ausgangposition oder in der Trittposition in einem gespannten Zustand befindet und wobei sich die Spannvorrichtung (14) in der jeweils anderen Position in einem im Wesentlichen entspannten Zustand befindet, wobei die Spannvorrichtung (14) insbesondere eine Gasdruckfeder ist.

7. Einstiegshilfe (1) nach Anspruch 6, wobei das Trittbrett (10) mit dem Schwenkarm (8) durch eine Zugvorrichtung (15) verbunden ist, wobei das Trittbrett (10) durch die Zugvorrichtung (15) von der Ausgangsposition in die Trittposition oder von der Trittposition in die Ausgangsposition schwenkbar ist, wobei die Zugvorrichtung (15) der Spannvorrichtung (14) entgegenwirkt, so dass die Spannvorrichtung (14) durch die Zugvorrichtung (15) spannbar ist.

8. Einstiegshilfe (1) nach einem der Ansprüche 5 bis 7, **dadurch gekennzeichnet, dass** der Schwenkarm (8) eine Ausnehmung (16) aufweist, in die das Trittbrett (10) in der Ausgangsposition versenkt ist, wobei das Trittbrett (10) insbesondere an einem Schenkel (12) befestigt ist und in der Ausgangsposition die gleiche Ausrichtung aufweist wie der Schenkel (12), wobei das Trittbrett (10) in der Trittposition bevorzugt im Wesentlichen orthogonal zu dem Schenkel (12) ausgerichtet ist.

9. Schienenfahrzeug (2) mit einer Einstiegshilfe (1) nach einem der vorhergehenden Ansprüche, **dadurch gekennzeichnet, dass** die Einstiegshilfe (1) bevorzugt in einem Führerstandwagen des Schienenfahrzeugs (2) ausgebildet ist.

10. Schienenfahrzeug (2) nach Anspruch 9, **dadurch gekennzeichnet, dass** eine Oberkante des Trittbretts in der Trittposition zwischen 10 cm bis 40 cm unter einer Einstiegskante des Schienenfahrzeugs (2) angeordnet ist.

11. Schienenfahrzeug (2) nach einem der Ansprüche 9 bis 10, **dadurch gekennzeichnet, dass** das Schienenfahrzeug (2) mindestens zwei Einstiegshilfen (1) aufweist, wobei auf beiden Seiten gegenüberliegend quer zur Fahrtrichtung (24) des Schienenfahrzeugs (2), bevorzugt pro Endwagen, insbesondere je eine Einstiegshilfe (1) ausgebildet ist.

12. Schienenfahrzeug (2) nach einem der Ansprüche 9 bis 11, **dadurch gekennzeichnet, dass** die erste Schwenkachse (9) in Richtung einer Schienenfahrzeuglängsrichtung (19) ausgebildet ist.

13. Schienenfahrzeug (2) nach einem der Ansprüche 9 bis 12, **dadurch gekennzeichnet, dass** die Einstiegshilfe (1) an einem Türrahmen (20) des Schienenfahrzeugs (2) angeordnet ist.

14. Schienenfahrzeug (2) nach einem der Ansprüche 9 bis 13, **dadurch gekennzeichnet, dass** das Schienenfahrzeug (2) eine Türöffnung (21) aufweist und sich der Schwenkarm (8) in der Benutzungsposition durch die Türöffnung (21) erstreckt und die Einstiegshilfe (1) in der Ruheposition insbesondere im Schienenfahrzeuginnenraum (23) innerhalb der Tür ausgebildet ist.

15. Verfahren zum Ein- und/oder Ausschwenken eines Trittbretts (10) einer Einstiegshilfe (1), insbesondere einer Einstiegshilfe (1) nach einem der Ansprüche 1 bis 8, umfassend die Schritte:
- Bewegen des Trittbretts (10) von einer Ausgangsposition in eine Trittposition oder von der Trittposition in die Ausgangsposition durch eine Zugvorrichtung (15) bei simultanem Spannen einer Spannvorrichtung (14), bevorzugt bis zum Anschlagen des Trittbretts (10) an einem Anschlag,
- Optional, Bewegen des Trittbretts (10) von der Ausgangsposition in die Trittposition oder von der Trittposition in die Ausgangsposition durch Entspannen der Spannvorrichtung (14) bei simultanem Einziehen der Zugvorrichtung (15), bevorzugt bis zum Anschlagen des Trittbretts (10) an dem Anschlag.
